Europäisches Patentamt

European Patent Office

Office européen des brevets

(19)

(11) Veröffentlichungsnummer : **0 019 164**
**B1**

(12) **EUROPÄISCHE PATENTSCHRIFT**

(45) Veröffentlichungstag der Patentschrift :
01.09.82

(51) Int. Cl.³ : **B 60 B 23/10**, F 16 B 21/12

(21) Anmeldenummer : 80102388.8

(22) Anmeldetag : 02.05.80

(54) Vorrichtung zur Befestigung einer Felge an einem Radkörper.

(30) Priorität : 09.05.79 CH 4343/79

(43) Veröffentlichungstag der Anmeldung :
26.11.80 (Patentblatt 80/24)

(45) Bekanntmachung des Hinweises auf die Patenterteilung : 01.09.82 Patentblatt 82/35

(84) Benannte Vertragsstaaten :
AT DE FR GB IT SE

(56) Entgegenhaltungen :
CH A 404 299
CH A 466 733
CH A 471 695
CH A 474 379
DE A 1 480 846
FR A 605 927
FR A 747 873
FR A 816 323
FR E 50 965
GB A 747 133
US A 3 382 006

(73) Patentinhaber : GEORG FISCHER AKTIENGE-
SELLSCHAFT
Mühlentalstrasse 105
CH-8201 Schaffhausen (CH)

(72) Erfinder : Rohr, Jakob
Grubenstrasse 105
CH-8200 Schaffhausen (CH)

EP 0 019 164 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Imprimerie Jouve, 18, rue St-Denis, 75001 Paris, France

## Vorrichtung zur Befestigung einer Felge an einem Radkörper

Die Erfindung betrifft eine Vorrichtung zur Befestigung einer Felge an einem Radkörper, insbesondere eines Schwerlastwagens oder Autobusses, mit am Umfang des Radkörpers angeordneten Auflagern zur Aufnahme von Befestigungselementen, wobei eine praktisch achsparallele Wand und eine senkrecht zu ihr verlaufende Schraubenwand mit einem winkelförmigen Schlitz versehen sind, durch den ein Hammerkopf einer Schraube einschiebbar und, zur Halterung gegen die Innenfläche der Schraubenwand, im Schlitz um 90° drehbar ist, so dass der Hammerkopf gegen die Schraubenwand anliegt, und mit einer Sperre zur Halterung der Schranke gegen Zurückschieben.

Zur Befestigung von Felgen an einem Radkörper werden meistens Befestigungselemente verwendet, die jeweils am Radkörper und an der Felge angreifen und mittels etwa parallel zur Radachse verlaufenden Schrauben befestigt werden. Derartige Ausführungen mit im obigen Absatz beschriebenen Merkmalen sind bereits bekannt und z.B. in den CH-A-466 733, 471 695 und 474 379 beschrieben.

Bei allen diesen Ausführungen werden Schrauben verwendet, die sich von der Radinnenseite her durch die Wandung des Radkörpers erstrecken. Die Befestigungsmutter wird dann von der Radaussenseite aufgeschraubt. Damit die Felge schnell am Radkörper montiert werden kann, ist es wichtig, dass die Schrauben bei abmontierter Felge sich parallel zur Radachse erstrecken. Wenn die Köpfe der Schrauben nur gegen die Innenseite der Schraubenwand anliegen, wie dies in CH-A-471 695 gezeigt ist, müssen die Schrauben auf der Radaussenseite gehalten werden. Solche Halterungen sind in der CH-A-474 379 in Form von Muttern und Klemmen gezeigt.

Solche Muttern und Klemmen sind aber mit den Nachteilen behaftet, dass sie, sofern sich die Schrauben durch eine Mulde des Radkörpers erstrecken, schwer zu montieren sind. Zudem ist im Falle einer Klemme ein Spezialwerkzeug zu deren Montage erforderlich.

Das Anbringen eines Federkörpers zwischen dem Schraubenkopf und einer hinter diesem liegenden Wandung ist in vielen Fällen fast unmöglich und sonst oft eine sehr unpraktische Lösung, weil sich der Federkörper, z.B. ein Gummistück, mit der Zeit leicht lösen kann, sofern er nicht an mehreren Seiten gehalten wird.

Die Aufgabe der vorliegenden Erfindung ist somit die Schaffung einer Vorrichtung der eingangs genannten Art, die gegenüber den bestehenden Ausführungen eine einfachere und bessere Halterung der Schrauben zur Befestigung der Felgen aufweist, damit diese schneller und sicherer am Radkörper montiert werden können.

Ferner soll die Befestigung, in einfacher Weise, ohne Verwendung von Spezialwerkzeugen montier- und lösbar sein.

Diese erfindungsgemässe Aufgabe ist mit der Lehre gemäss dem gekennzeichneten Teil des Anspruches 1 gelöst. Ausführungsformen dieser Lehre sind in den weiteren, abhängigen Ansprüchen umschrieben.

Die beschriebene Lösung hat gegenüber bestehenden Ausführungen mit einer Klemme den Vorteil, dass eine Verschiebung der eingesetzten Schraube in der Längsrichtung nicht möglich ist. Ferner kann die Sperre, z.B. eine Vorsteckfeder, ohne Verwendung eines Spezialwerkzeuges eingesetzt oder entfernt werden. Wegen der Scheibe kann sich eine Schraube nicht mehr lösen, bevor die Vorsteckfeder entfernt wird, die z.B. mittels eines normalen Hammers eingeschlagen und mit Hilfe einer Beisszange entfernt werden kann. Dagegen kann sich eine mittels einer Klemme gehaltene Schraube u.U. lösen.

Gegenüber der Ausführung, bei der die Schraube, mittels einer gegen die Schraubenwand angeschraubte Mutter gehalten wird, hat die vorliegende Lösung den Vorteil, dass die Gewindelänge der Schraube viel kürzer gehalten werden kann. Ferner ist das Anziehen dieser Mutter, wenn der Speichenkopf eine Mulde aufweist, schwer oder fast unmöglich, und auf jeden Fall zeitraubend.

Nachfolgend wird ein Ausführungsbeispiel der erfindungsgemässen Vorrichtung anhand der Zeichnung näher erläutert.

Es zeigen :

Figur 1 eine Draufsicht in radialer Richtung auf eine Speichenkopfmulde,

Figur 2 einen Schnitt längs der Linie II-II in Fig. 1, und

Figur 3 eine Ansicht in Richtung III nach Fig. 1.

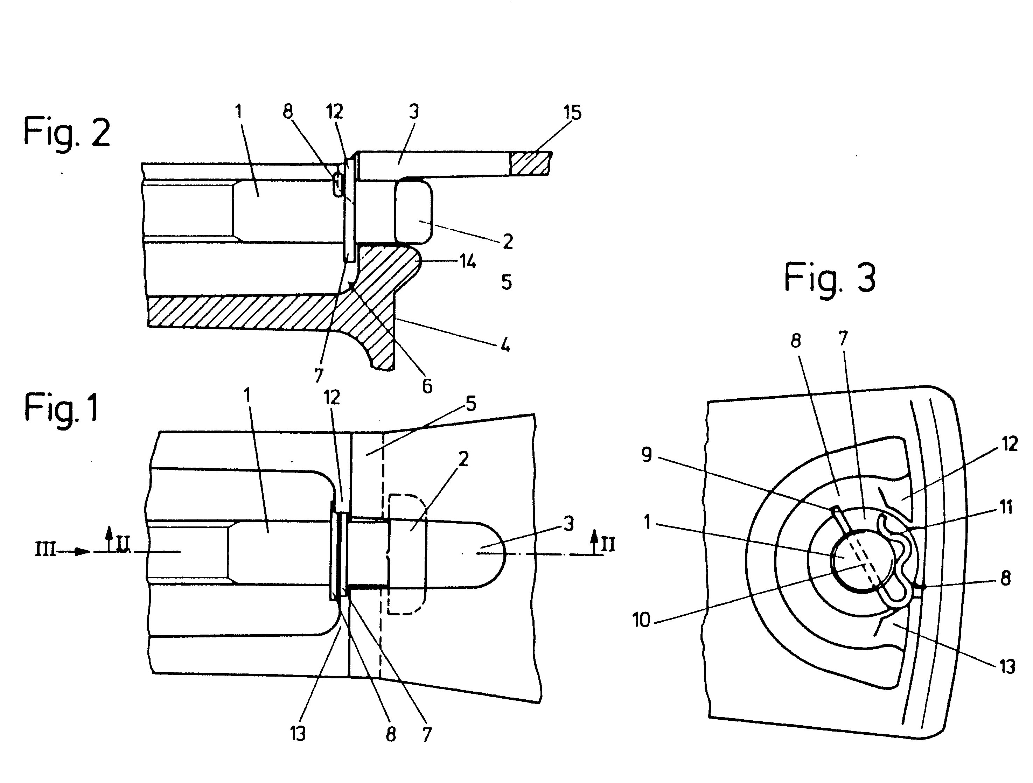

In Fig. 1 und 2 ist eine Hammerkopf-Schraube 1 mit einem Kopf 2 dargestellt, der in einen winkelförmigen Schlitz 3 eingeschoben und danach um 90° gedreht ist, so dass der Kopf 2 gegen die Innenfläche 4 einer Schraubenwand 5 anliegt.

Gegen die Aussenfläche 6 der Schraubenwand 5 ist eine Scheibe 7 angelegt, die auf die Schraube 1 aufgeschoben ist. Ausserhalb der Scheibe 7 ist eine Vorsteckfeder 8 angeordnet, deren eine Arm 9 durch ein radiales Loch 10 durch die Schraube 1 geführt ist, während der andere Arm 11 teilweise rund um die Schraube 1 läuft.

Wenn das Spiel zwischen der Vorsteckfeder 8 und der Scheibe 7 niedrig ist, kann sich die Schraube 1 nicht mehr lösen. Um gänzlich zu verhindern, dass sich die Schraube 1 löst, sofern die Toleranzen gross sein sollten, sind an der Aussenfläche 6 der Schraubenwand 5 zwei Vorsprünge 12 und 13 vorgesehen, welche die Bewegungsmöglichkeit der Scheibe 7 reduzieren. Der erste Vorsprung 12 erstreckt sich dabei weiter von der Schraubenwand 5 als der zweite 13, so dass er die Dicke der Scheibe 7 überragt. Der zweite Vorsprung 13 erstreckt sich dagegen höchstens so weit, dass er die Aussenkante der Scheibe 7 erreicht. Da das Loch 10 schräg zur Längsrichtung des Kopfes 2 verläuft, kann die Vorsteckfeder 8 über den zweiten Vorsprung 13 hinweg in das Loch 10 eingesetzt werden, wie dies in Fig. 3 gezeigt ist.

Durch die Verwendung der beiden Vorsprünge 12, 13 wird sicher verhindert, dass sich die Schraube 1 aus der Befestigung lösen kann.

In der dargestellten Ausführung wird die Schraube 1 drehfest durch die Wand 15 senkrecht zur Schraubenwand 5 und durch den Schlitz 3 durch diese Wand 15 gehalten. Um die Abstützung noch zu verbessern, kann ein angegossener Schraubenanschlag 14 (Fig. 2) unter dem Kopf 2 an der Schraubenwand 5 vorgesehen werden. In der Weise wird der Kopf 2 an seinen beiden Längsseiten abgestützt, so dass die Belastung auf die Wand 15 verringert wird.

Die beschriebene Lösung erleichtert und beschleunigt die Montage von Felgen und das Auswechseln von Schrauben, sofern erforderlich. Die Schrauben erstrecken sich im montierten Zustand praktisch parallel zur Radachse und können sich nicht von selbst lösen.

## Ansprüche

1. Vorrichtung zur Befestigung einer Felge an einem Radkörper, insbesondere eines Schwerlastwagens oder Autobusses, mit am Umfang des Radkörpers angeordneten Auflagern zur Aufnahme von Befestigungselementen, wobei eine praktisch achsparallele Wand (15) und eine senkrecht zu ihr verlaufende Schraubenwand (5) mit einem winkelförmigen Schlitz (3) versehen sind, durch den ein Hammerkopf (2) einer Schraube (1) einschiebbar und, zur Halterung, gegen die Innenfläche der Schraubenwand (5), im Schlitz um 90° drehbar ist, so dass der Hammerkopf gegen die Schraubenwand anliegt, und mit einer Sperre zur Halterung der Schraube gegen Zurückschieben, dadurch gekennzeichnet, dass die Aussenfläche (6) der Schraubenwand (5) auf der einen Seite des Schlitzes (3) einen ersten (12) und auf der anderen Seite einen zweiten Vorsprung (13) aufweist, die beide zur Halterung einer auf die Schraube aufgeschobenen Scheibe (7) dienen, und dass die Schraube (1) auf der Aussenseite der aufgesetzten Scheibe (7) ein Loch (10) zur Aufnahme der Sperre (8) zur Halterung der Schraube (1) aufweist.

2. Vorrichtung nach Anspruch 1, dadurch gekennzeichnet, dass die Sperre eine Vorsteckfeder (8) ist.

3. Vorrichtung nach Anspruch 1 oder 2, dadurch gekennzeichnet, dass der erste Vorsprung (12) eine Höhe aufweist, die mindestens derjenigen der Scheibe (7) entspricht.

4. Vorrichtung nach Anspruch 1, 2 oder 3, dadurch gekennzeichnet, dass der zweite Vorsprung (13) eine Höhe aufweist, die höchstens derjenigen der Scheibe (7) entspricht.

5. Vorrichtung nach einem oder mehreren der Ansprüche 1 bis 4, dadurch gekennzeichnet, dass das Loch (10) unmittelbar ausserhalb des zweiten Vorsprunges (13) angeordnet ist, damit die Sperre oder Vorsteckfeder (8) über diesen Vorsprung (13) einsetzbar ist.

## Claims

1. Means for fastening a rim onto a wheel body, in particular for heavy trucks or coaches, with supports around the periphery of the wheel body for receiving fastening elements, with a first wall (15) practically parallel to the axis and a second wall (5) being perpendicular to the first one, with an angle-shaped slot (3) through both walls for receiving a hammerhead (2) of a screw (1) therethrough, which is held in the slot (3) against the inner surface of the second wall (5) after a 90° rotation of the screw, so that the hammerhead (2) is lying against the first wall (5), and with a stop element for holding the screw in position against a pushing-back thereof, characterized in that the outer surface (6) of the first wall (5) on one side of the slot (3) has a first (22) and on the other side a second projection (13), which both serve to hold a washer (7) placed on the screw (1), and that the screw (1), on the outside of the washer (7), has a hole (10) for receiving the stop element (8) for holding the screw (1) in position.

2. Means according to claim 1, characterized in that the stop element is a split cotter pin (8).

3. Means according to claim 1 or 2, characterized in that the first projection (12) has a height, that at least corresponds to that of the washer (7).

4. Means according to claim 1, 2 or 3, characterized in that the height of the second projection (13) does not exceed that of the washer (7).

5. Means according to one or more of the claims 1 through 4, characterized in that the hole (10) is located immediately outside the second projection (13), so that the stop element or split cotter pin (8) can be inserted over this projection (13).

## Revendications

1. Dispositif de fixation d'une jante au corps d'une roue, notamment d'un camion ou d'un autobus, comportant des supports disposés à la périphérie du corps de roue pour recevoir des éléments de fixation, à l'effet de quoi il est prévu une paroi pratiquement parallèle à l'axe de roue et une paroi de boulonnage orientée perpendiculairement à la première et pourvue d'une fente de profil coudé dans laquelle peut être engagée une tête en forme de marteau d'un boulon qui, pour être maintenue contre la face intérieure de la paroi de boulonnage, peut être tournée de 90° dans la fente de manière que la tête en forme de marteau s'applique contre la paroi de boulonnage, un verrou étant prévu pour empêcher le boulon de reculer, caractérisé en ce que la face extérieure (6) de la paroi de boulonnage (5) comporte, d'un côté de la fente (3), une première saillie (12) et, de l'autre côté, une seconde saillie (13), qui servent toutes les deux à maintenir une rondelle (7) engagée sur le boulon et en ce que le boulon (1) comporte, sur le côté extérieur de la rondelle engagée (7), un trou (10) servant à recevoir le verrou (8) de retenue du boulon (1).

2. Dispositif selon la revendication 1, caractérisé en ce que le verrou est une épingle élastique enfichable (8).

3. Dispositif selon l'une des revendications 1 et 2, caractérisé en ce que la première saillie (12) présente une hauteur qui correspond au moins à celle de la rondelle (7).

4. Dispositif selon l'une quelconque des revendications 1, 2 et 3, caractérisé en ce que la seconde saillie (13) présente une hauteur qui correspond au maximum à celle de la rondelle (7).

5. Dispositif selon l'une quelconque des revendications 1 à 4, caractérisé en ce que le trou (10) est placé immédiatement à l'extérieur de la seconde saillie (13) afin que le verrou ou l'épingle élastique enfichable (8) puisse être mis en place au-dessus de cette saillie (13).

Fig. 3

Fig. 2

Fig. 1